# EUROPÄISCHE PATENTSCHRIFT

(11) **EP 0 981 570 B1**
(45) Veröffentlichungstag und Bekanntmachung des Hinweises auf die Patenterteilung: **16.10.2002**
(21) Anmeldenummer: 98924297.9
(22) Anmeldetag: 11.05.1998
(51) Int. Cl.: C08G 77/48, C08G 77/50, C08G 83/00, C09D 183/14

(54) **ORGANOSILAN-OLIGOMERE**
ORGANOSILANE OLIGOMERS
OLIGOMERES OBTENUS A PARTIR D'ORGANOSILANES

(30) Priorität: 23.05.1997 DE 19721626; 23.02.1998 DE 19807634
(43) Veröffentlichungstag der Anmeldung: 01.03.2000
(73) Patentinhaber: BAYER AG, 51368 Leverkusen (DE)
(72) Erfinder: MAGER, Michael, D-51375 Leverkusen (DE); MECHTEL, Markus, D-450937 Köln (DE)
(86) Internationale Anmeldenummer: EP9802728
(87) Internationale Veröffentlichungsnummer: WO98052992

(56) Entgegenhaltungen:
- WO-A-94/06807
- WO-A-97/01565
- DE-C- 19 603 241

## Beschreibung

Die Erfindung betrifft Organosilan-Oligomere, die sich als Beschichtungsmittel eignen.

Aus DE 196 03 241 und WO 94/06807 sind zahlreiche cyclische Organosilane bekannt, aus welchen über einen Sol-Gel-Prozeß anorganisch-organische Hybridmaterialien herstellbar sind. Diese Materialien können zur Beschichtung von Oberflächen eingesetzt werden. Die erhaltenen Beschichtungen zeichnen sich durch hohe Transparenz, gute Lösungsmittelfestigkeit und große mechanische Verschleißfestigkeit bei ausgezeichneter Elastizität aus.

Bei der Beschichtung von porösen Untergründen, z.B. von porösen anorganischen Partikeln oder mineralischen Oberflächen (z.B. Oberflächen von Steinen) penetrieren die monomeren Organosilane weit in das Material und müssen daher in unwirtschaftlich großer Menge, beispielsweise durch Mehrfachauftrag aufgebracht werden, um die Oberfläche wirksam zu beschichten. Erst dann sind die Beschichtungen beispielsweise als Anti-Graffiti-Beschichtungen geeignet.

Aufgabe der Erfindung war, diese Nachteile zu vermeiden. Die zur Lösung dieser Aufgabe zu entwickelnden Beschichtungsmaterialien sollten jedoch in organischen Lösungsmitteln löslich sein, um überhaupt angewendet werden zu können.

Die Aufgabe wird mit Oligomeren von bestimmten cyclischen Organosilanen gelöst.

Gegenstand der Erfindung sind daher in organischen Lösungsmitteln lösliche Oligomere (I), erhältlich durch Kondensation von gleichen oder verschiedenen Monomeren der Formel II 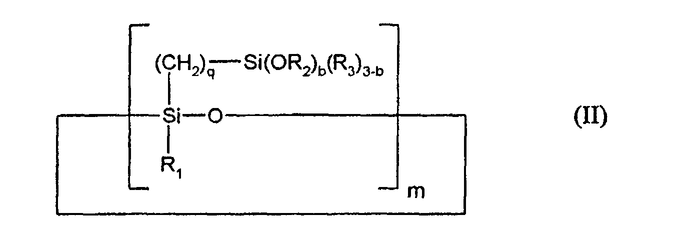 worin
- m: 3 bis 6, vorzugsweise 4,
- q: 2 bis 10, vorzugsweise 2,
- b: 1, 2 oder 3, vorzugsweise 1 oder 2,
- R₁: C₁-C₆-Alkyl oder C₆-C₁₄-Aryl, vorzugsweise Methyl oder Ethyl,
- R₂: Wasserstoff, Alkyl oder Aryl, wenn b 1 ist, oder Alkyl oder Aryl, wenn b 2 oder 3 ist, und
- R₃: Alkyl oder Aryl, vorzugsweise Methyl bedeuten.

Beispiele für Verbindungen der Formel (II) sind:
(II-1) cyclo-{OSiCH₃[(CH₂)₂Si(OH)(CH₃)₂]}₄,
(II-2) cyclo-{OSiCH₃[(CH₂)₂Si(OCH₃)(CH₃)₂]}₄.
(II-3) cyclo-{OSiCH₃[(CH₂)₂Si(OCH₃)₂CH₃]}₄,
(II-4) cyclo-{OSiCH₃[(CH₂)₂Si(OC₂H₅)₂CH₃]}₄,
(II-5) cyclo-{OSiCH₃[(CH₂)₂Si(OC₂H₅)₃]}₄,

Geeigente organische Lösungsmittel für die Oligomeren sind beispielsweise monound polyfunktionelle Alkohole, wie Methanol, Ethanol, n-Butanol, Ethylenglykol sowie Mischungen von aromatischen Kohlenwasserstoffen und aliphatischen Ketonen oder Estern.

Die Oligomeren (I) lassen sich aus den Monomeren der Formel (II) oder aus den Ausgangsprodukten zur Herstellung der Monomeren der Formel (II) direkt herstellen, wobei als Ausgangsprodukte solche Verbindungen der Formel (II) in Betracht kommen, die anstelle der Gruppe OR₂ ein Halogenatom, z.B. ein Chlor-, Brom- oder Iodatom enthalten. Bevorzugt werden zur Herstellung der Oligomere (I) die entsprechenden Chlorsilane eingesetzt. Die Reaktion erfolgt in Gegenwart von Wasser und/oder Alkohol. Das dabei entstehende Salzsäuregas wird ausgetrieben oder ausgewaschen, gegebenenfalls in Gegenwart einer Base (z.B. NH₃). Falls die erhaltene Oligomerenmischung noch Si-Cl-Gruppen enthält, kann zum Beispiel mit weiterer Base in Gegenwart von Wasser und/oder Alkoholen nachbehandelt werden.

Die Alkoholyse und Hydrolyse von Chlorsilanen ist dem Fachmann grundsätzlich bekannt.

Überraschenderweise sind die Oligomeren I in den Lösungsmitteln löslich und vernetzen bei ihrer Herstellung nicht, obwohl sie multifunktionelle reaktive Gruppen aufweisen. Nach dem z.B. in WO 94/06807 beschriebenen Verfahren (Sol-Gel-Prozess) ist es nicht möglich, den Polymerisationsprozeß zu stoppen, um lösliche und lagerstabile Oligomere (I) zu erhalten. Die Hydrolyse und Kondensation schreitet solange fort, bis ein unschmelzbares und unlösliches Gel entstanden ist.

Diese Oligomere eignen sich zur Beschichtung von Partikeln, insbesondere Partikeln mit anorganischem Gehalt, vorzugsweise rein anorganischen Partikeln, darüber hinaus aber auch zur Beschichtung von Kunststoffen zur Verbesserung der mechanischen Beständigkeit, als Anti-Graffiti-Beschichtung auf mineralischen und metallischen Untergründen oder organischen Beschichtungen (z.B. an Bauwerken oder Fahrzeugen) und zur Hydrophobierung von Untergründen, z.B. aus Stein oder Glas.

Die Anwendung dieser Oligomere erfolgt gegebenenfalls unter (Co)-Kondensation mit Alkoxiden, beispielsweise denen der Formel III, und/oder Nanopartikeln (IV),

M₁(OR₄)_{y} (III)

worin
- M₁: Si, Sn, Ti, Zr, B oder Al,
- R₄: Alkyl oder Aryl, vorzugsweise C₁-C₄-Alkyl und
- y: im Falle von Si, Sn, Ti, Zr 4 und im Falle von B oder Al 3 bedeuten.

Beispiele für Alkoxide der Formel III sind:
(III-1) Si(OC₂H₅)₄
(III-2) B(OC₂H₅)₃
(III-3) Al(O-i-C₃H₇)₃
(III-4) Zr(O-i-C₃H₇)₄.

Beispiele für Nanopartikel (IV) sind feinteilige Metalloxide oder Metalloxidhydroxide der Elemente Si, Sn, In, Ti, Zr, B oder Al, z.B. Kieselsole, die insbesondere organische Lösungsmittel enthalten. Deren bevorzugte mittlere Teilchengröße, bestimmt in der Ultrazentrifuge, liegt im Bereich von 1 bis 100 nm, bevorzugt von 1 bis 50 nm; sie werden daher als "Nanopartikel" bezeichnet.

Die Beschichtungen enthalten vorzugsweise 0,1 bis 100 Gew.-% Oligomere (I), 0 bis 70 Gew.-% Nanopartikel (IV), 0 bis 99,9 Gew.-% Alkoxid (III) und 0 bis 10 Gew.-% Katalysator (V). Besonders bevorzugt enthalten die Beschichtungen 20 bis 80 Gew.-% Oligomere (I), 20 bis 80 Gew.-% Alkoxid (III), 0 bis 50 Gew.-% Nanopartikel (IV) und 0 bis 5 Gew.-% Katalysator (V).

Geeignete Katalysatoren (V) sind organische und anorganische Säuren oder Basen, z.B. HCO₂H, CH₃COOH, HCl, NH₄OH und Alkalihydroxide sowie F-haltige Salze wie NaF oder NH₄F. Ebenso können die zugesetzten Metallalkoxide selbst, wie Ti(OC₂H₅)₄ und Ti(Oi-C₃H₇)₄ katalytisch wirksam sein. Auch Metallseifen wie Zinkoctoat oder Dibutylzinnlaureat können eingesetzt werden.

In einer bevorzugten Ausführungsform werden die Oligomere (I) gegebenenfalls in einem Lösemittel, zunächst mit Alkoxiden (III) und/oder Nanopartikeln (IV) vermischt, und gegebenenfalls in Gegenwart eines Katalysators (V), miteinander zur Reaktion gebracht. Zur Erhöhung der Reaktivität und zur Verminderung des Austrags niedrigsiedender, leichtflüchtiger Ausgangsmaterialien der Reaktionsmischung ist es besonders günstig, die Reaktionsmischung zunächst mit Wasser zur Reaktion zu bringen, gegebenenfalls in Gegenwart eines Katalysators, wobei sich reaktive, weniger flüchtige Kondensate bilden. Angaben zur Herstellung der Kondensate gegebenenfalls in Gegenwart von Alkoxiden, finden sich z.B. in DE-OS 196 03 242 und WO 94/06897. Z.B. werden polyfunktionelle Organosilane mit den Alkoxiden, einem Lösungsmittel, Wasser und einem Katalysator unter Rühren zusammengegeben und eine bestimmte Zeit zur Reaktion gebracht, ehe aus diesen Lösungen Filme oder, nach vollständiger Reaktion (Gelierung), auch Formkörper erhalten werden können.

Nach einer bestimmten Reaktionszeit wird diese Beschichtungslösung mit geeigneten Verfahren, z.B. durch Streichen, Sprühen oder Tauchen auf die Materialien aufgebracht, die flüchtigen Bestandteile verdampft und die so erhaltene Beschichtung gegebenenfalls thermisch nachgehärtet.

### Beispiele

### Beispiel 1: Herstellung von 1,3,5,7-Tetramethyl-1,3,5,7-tetra-(2-(dichlormethylsilyl)ethylen)-cyclotetrasiloxan

229,3 g (0,667 mol) 1,3,5,7-Tetramethyl-1,3,5,7-tetravinyl-cyclotetrasiloxan, 125 g Xylol und 36 mg Platin-Katalysator wurden unter Rühren auf 60°C erwärmt. Anschließend wurden 252,1 g (2,668 mol) Methyldichlorsilan zugetropft. Es fand eine exotherme Reaktion statt. Nach Beendigung des Zutropfens wurde noch 2 Stunden unter Rückfluß gerührt. Nach Abkühlen auf Raumtemperatur wurde mit N₂ belüftet, Filterhilfsmittel (Kieselgur) zugesetzt und filtriert. Das Produkt wurde ohne weitere Untersuchung für weitere Synthesen eingesetzt.

### Beispiel 2: Herstellung des Kondensationsproduktes von 1,3,5,7-Tetramethyl-1,3,5,7-tetra-(2-(diethoxymethylsilyl)ethylen)-cyclotetrasiloxan

600 g der gemäß Beispiel 1 hergestellten Lösung von 1,3,5,7-Tetramethyl-1,3,5,7-tetra-(2-(dichlormethylsilyl)ethylen)-cyclotetrasiloxan wurden vorgelegt. Hierzu wurden bei einem Druck von ca. 500 mbar 500 g Ethanol unter die Flüssigkeitsoberfläche eingeleitet. Anschließend wurde bis zu einem Druck von 10 mbar und einer Temperatur von 60°C destilliert und mit N₂ belüftet. Dann wurden weitere 250 g Ethanol zugegeben und bis zu einem Druck von 10 mbar und einer Temperatur von 100°C destilliert und dann mit N₂ belüftet. Über ein Gaseinleitungsrohr wurde bis zur Sättigung Ammoniak eingeleitet und 4 Stunden gerührt. Anschließend wurde überschüssiges Ammoniak entfernt und Ammoniumchlorid abfiltriert. Das Filtrat wurde mit Na₂CO₃ neutralisiert, mit Filterhilfsmittel (Kieselgur) versetzt und bis 130°C bei einem Druck von 10 mbar ausgeheizt.

Das Produkt fiel als klare Flüssigkeit mit einer Viskosität von 80 mPa.s, einer Dichte von 1,00 g/ml und einer Restmenge an hydrolysierbarem Chlor von 7 ppm an. Mittels schneller Gelpermcationschromatographie (SGPC) mit Dichlormethan als Lösungsmittel und IR- und RI-Detektor wurde die Molmassenverteilung ermittelt. Das Kondensationsprodukt von 1,3,5,7-Tetramethyl-1,3,5,7-tetra-(2-(diethoxy-methylsilyl)-ethylen)-cyclotetrasiloxan lag als kontinuierliche Molmassenverteilung mit einem mittleren Zahlenmittel (Mₙ) von 1 350 g/mol und einem mittleren Gewichtsmittel von 3 355 g/mol vor.

## Patentansprüche

1. In organischen Lösungsmitteln lösliche Oligomere, erhältlich durch Kondensation von gleichen oder verschiedenen Monomeren der Formel 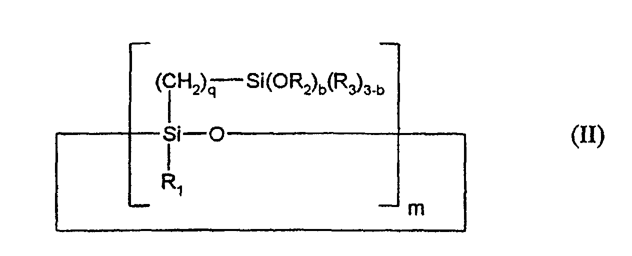 worin
R₁ C₁-C₆-Alkyl oder C₆-C₁₄-Aryl,
R₂ Wasserstoff, Alkyl oder Aryl, wenn b 1 ist, oder Alkyl oder Aryl, wenn b 2 oder 3 ist,
R₃ Alkyl oder Aryl,
m 3 bis 6,
q 2 bis 10 und
b 1, 2 oder 3 bedeuten.

2. In organischen Lösungsmitteln lösliche Oligomere nach Anspruch 1, worin
R₁ Methyl oder Ethyl,
R₂ Wasserstoff, Methyl oder Ethyl, wenn b 1 ist, oder Methyl oder Ethyl, wenn b 2 ist,
R₃ Methyl,
m 4,
q 2 und
b 1 oder 2 bedeuten.

3. In organischen Lösungsmitteln lösliche Oligomere nach Anspruch 1, erhältlich durch Kondensation von gleichen oder verschiedenen Monomeren der Formel II, worin anstelle von OR₂ ein Chloratom steht, in Gegenwart von Wasser und/oder Alkoholen.

4. Verwendung der Oligomere gemäß Anspruch 1 zur Beschichtung von Kunststoffen, mineralischen und metallischen Untergründen und von Glas.

5. Verwendung nach Anspruch 4 unter Co-Kondensation der Oligomere mit Alkoxiden der Formel
M₁(OR₄)_{y}
worin
M₁ Si, Sn, Ti, Zr, B oder Al,
R₄ Alkyl oder Aryl und
y im Falle von Si, Sn, Ti und Zr 4 und im Falle von B oder Al 3 bedeuten.

6. Verwendung nach Ansprüchen 4 und 5 unter Co-Kondensation mit Nanopartikeln.

7. Verwendung nach Ansprüchen 5 und 6, **dadurch gekennzeichnet, daß** die Beschichtungen 0,1 bis 100 Gew.-% Oligomer, 0 bis 70 Gew.-% Nanopartikeln, 0 bis 99,9 Gew.-% Alkoxid und 0 bis 10 Gew.-% Katalysator enthalten.

8. Verwendung nach Ansprüchen 5 und 6, **dadurch gekennzeichnet, daß** die Beschichtungen 20 bis 80 Gew.-% Oligomer, 20 bis 80 Gew.-% Alkoxid und 0 bis 50 Gew.-% Nanopartikel und 0 bis 5 Gew.-% Katalysator enthalten.

9. Verwendung nach Ansprüchen 7 und 8, **dadurch gekennzeichnet, daß** als Katalysator organische oder anorganische Säuren oder Basen eingesetzt werden.

## Claims

1. Oligomers soluble in organic solvents and obtainable by condensing identical or different monomers of the formula 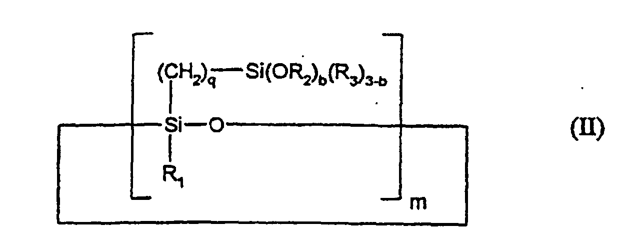 in which
R₁ means C₁-C₆ alkyl or C₆-C₁₄ aryl,
R₂ means hydrogen, alkyl or aryl, if b is 1, or alkyl or aryl, if b is 2 or 3,
R₃ means alkyl or aryl,
m means 3 to 6,
q means 2 to 10 and
b means 1, 2 or 3.

2. Oligomers soluble in organic solvents according to claim 1, in which
R₁ means methyl or ethyl,
R₂ means hydrogen, methyl or ethyl, if b is 1, or methyl or ethyl, if b is 2,
R₃ means methyl,
m means 4,
q means 2 and
b means 1 or 2.

3. Oligomers soluble in organic solvents according to claim 1, obtainable by condensing identical or different monomers of the formula II, which have a chlorine atom instead of OR₂, in the presence of water and/or alcohols.

4. Use of the oligomers according to claim 1 for coating plastics, mineral and metallic substrates and glass.

5. Use according to claim 4 with co-condensation of the oligomers with alkoxides of the formula
M₁(OR₄)_{y}
in which
M₁ means Si, Sn, Ti, Zr, B or Al,
R₄ means alkyl or aryl and
y means 4 in the case of Si, Sn, Ti, Zr and 3 in the case of B or Al.

6. Use according to claims 4 and 5 with co-condensation with nanoparticles.

7. Use according to claims 5 and 6,**characterised in that** the coatings contain 0.1 to 100 wt.% of oligomer, 0 to 70 wt.% of nanoparticles, 0 to 99.9 wt.% of alkoxide and 0 to 10 wt.% of catalyst.

8. Use according to claims 5 and 6, **characterised in that** the coatings contain 20 to 80 wt.% of oligomer, 20 to 80 wt.% of alkoxide and 0 to 50 wt.% of nanoparticles and 0 to 5 wt.% of catalyst.

9. Use according to claims 7 and 8, **characterised in that** organic or inorganic acids or bases are used as the catalyst.

## Revendications

1. Oligomères solubles dans des solvants organiques, que l'on obtient par condensation de monomères identiques ou différents répondant à la formule 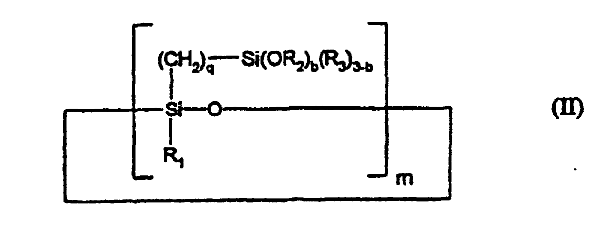 dans laquelle
R₁ représente un groupe alkyle en C₁-C₆ ou un groupe aryle en C₆-C₁₄,
R₂ représente un atome d'hydrogène, un groupe alkyle ou un groupe aryle lorsque b est égal à 1 ou représente un groupe alkyle ou groupe aryle lorsque b est égal à 2 ou 3,
R₃ représente un groupe alkyle ou un groupe aryle,
m représente un nombre de 3 à 6,
q représente un nombre de 2 à 10 et
b représente 1, 2 ou 3.

2. Oligomères solubles dans des solvants organiques, selon la revendication 1, dans lesquels
R₁ représente un groupe méthyle ou un groupe éthyle,
R₂ représente un atome d'hydrogène, un groupe méthyle ou un groupe éthyle lorsque b est égal à 1 ou représente un groupe méthyle ou un groupe éthyle lorsque b est égal à 2,
R₃ représente un groupe méthyle,
m représente 4,
q représente 2 et
b représente 1 ou 2.

3. Oligomères solubles dans des solvants organiques selon la revendication 1, que l'on obtient par condensation de monomères identiques ou différents répondant à la formule (II), dans laquelle un atome de chlore remplace le groupe OR₂, en présence d'eau et/ou d'alcools.

4. Utilisation des oligomères selon la revendication 1 pour l'enduction de matières synthétiques, de substrats minéraux et métalliques et de verre.

5. Utilisation selon la revendication 4 dans des conditions de cocondensation des oligomères avec des alcoxydes répondant à la formule
M₁(OR₄)_{y}
dans laquelle
M₁ représente un atome de silicium, un atome d'étain un atome de titane, un atome de zirconium, un atome de bore ou un atome d'aluminium,
R₄ représente un groupe alkyle ou un groupe aryle, et
y représente 4 dans le cas du silicium, de l'étain, du titane et du zirconium et représente 3 dans le cas du bore ou de l'aluminium.

6. Utilisation selon les revendications 4 et 5, dans des conditions de cocondensation avec des nanoparticules.

7. Utilisation selon les revendications 5 et 6, **caractérisée en ce que** les enductions contiennent un oligomère à concurrence de 0,1 à 100 % en poids, des nanoparticules à concurrence de 0 à 70 % en poids, un alcoxyde à concurrence de 0 à 99,9 % en poids et un catalyseur à concurrence de 0 à 10 % en poids.

8. Utilisation selon les revendications 5 et 6, **caractérisée en ce que** les enductions contiennent l'oligomère à concurrence de 20 à 80 % en poids, l'alcoxyde à concurrence de 20 à 80 % en poids, les nanoparticules à concurrence de 0 à 50 % en poids, et le catalyseur à concurrence de 0 à 5 % en poids.

9. Utilisation selon les revendications 7 et 8, **caractérisé en ce qu'**on met en oeuvre, à titre de catalyseur, des acides ou des bases organiques ou inorganiques.
